Europäisches Patentamt

European Patent Office

Office européen des brevets

(19)

(11) Veröffentlichungsnummer : **0 434 120 B1**

## (12) EUROPÄISCHE PATENTSCHRIFT

(45) Veröffentlichungstag der Patentschrift :
26.01.94 Patentblatt 94/04

(51) Int. Cl.$^5$ : **C22B 7/02**

(21) Anmeldenummer : **90203251.5**

(22) Anmeldetag : **11.12.90**

(54) **Verfahren zur Aufarbeitung von Zink und Blei enthaltenden Hüttenwerks-Reststoffen.**

(30) Priorität : **21.12.89 DE 3942337**

(43) Veröffentlichungstag der Anmeldung :
**26.06.91 Patentblatt 91/26**

(45) Bekanntmachung des Hinweises auf die
Patenterteilung :
**26.01.94 Patentblatt 94/04**

(84) Benannte Vertragsstaaten :
**AT DE ES FR GB IT LU NL SE**

(56) Entgegenhaltungen :
**EP-A- 0 007 662**
**EP-A- 0 150 805**
**US-A- 3 756 804**
**US-A- 3 850 613**
**US-A- 4 396 424**
**US-A- 4 488 905**

(73) Patentinhaber : **METALLGESELLSCHAFT AG**
**Postfach 10 15 01, Reuterweg 14**
**D-60015 Frankfurt (DE)**

(72) Erfinder : **Hirsch, Martin**
**Römerstrasse 7**
**W-6382 Friedrichsdorf (DE)**
Erfinder : **Kaune, Albert, Dr.**
**Hainstrasse 10a**
**W-6240 Königstein 2 (DE)**
Erfinder : **Saatci, Alpaydin, Dr.**
**Alt-Fechenheim 60**
**W-6000 Frankfurt 61 (DE)**
Erfinder : **Broj, Karlheinz**
**Hauptstrasse 69**
**W-6234 Hattersheim (DE)**
Erfinder : **Härter, Uwe, Dr.**
**Sibyllenweg 23**
**W-4200 Dinslaken (DE)**
Erfinder : **Meichsner, Walter**
**Kaiserstrasse 52**
**W-4150 Krefeld 1 (DE)**

Jouve, 18, rue Saint-Denis, 75001 PARIS

## Beschreibung

Die Erfindung betrifft ein Verfahren zur Aufarbeitung von Zink und Blei enthaltenden Hüttenwerks-Reststoffen durch thermische Behandlung bei erhöhten Temperaturen und reduzierenden Bedingungen, wobei Zink und Blei verflüchtigt und höhere Eisenoxide maximal zum FeO reduziert werden, und verdampftes Zink und Blei aus dem Abgas nach einer Abkühlung abgeschieden werden.

Bei der Roheisen- und Stahlherstellung fallen in den verschiedenen Verfahrensstufen - z.B. in den Sinteranlagen, am Hochofen, an den Blas-Konvertern, an Elektrolichtbogenöfen und in Walzwerken - Reststoffe in Form von Stäuben und Schlämmen an, die hauptsächlich aus Eisen bestehen, jedoch geringe Mengen an Zink, Blei und Alkalien enthalten bzw. mit Öl kontaminiert sind. Ihre Rückführung z.B. über die Sinteranlage in den Verarbeitungsprozeß ist problematisch, da ihre Gehalte an Zink, Blei und Alkalien Schwierigkeiten im Hochofen-Prozeß verursachen. Eine Deponie dieser Reststoffe wird aus Gründen des Umweltschutzes immer schwieriger. Außerdem gehen bei einer Deponie beträchtliche Mengen an Eisen, Zink und Blei verloren. Für ein Recycling dieser Reststoffe über die Sinteranlagen ist also eine Absenkung ihres Gehaltes an Zink, Blei, Alkalien und Öl vor dem Einsatz in die Sinteranlagen erforderlich.

Es sind Verfahren bekannt, bei denen unter reduzierenden Bedingungen Zink, Blei und Alkalien verflüchtigt werden und die Eisenoxide zu einem beträchtlichen Teil zu metallischem Eisen reduziert werden. Beim Sintern dieser so vorbehandelten Reststoffe wird der Gehalt an metallischem Eisen wieder reoxidiert. Außerdem kann das metallische Eisen in der Sintermischung negative Auswirkungen auf das Sinterverfahren haben.

Es sind auch Verfahren bekannt, bei denen der Eisengehalt nur bis zum FeO reduziert wird.

Aus der DE-AS 10 56 157 ist es bekannt, zinkhaltige Eisenerze in einer Wirbelschicht zu behandeln, wobei das Abgas Zink in Form von metallischem Zink und teilweise in Form von Zinkoxid enthält und die Eisenoxide mindestens zu FeO reduziert werden. Für eine schnellere Entzinkung müssen die Eisenoxide jedoch zu metallischem Eisen reduziert werden. Die zinkhaltigen Eisenerze werden in Pellets der Größenordnung von Millimetern eingesetzt, aus dem Abgas wird der Wirbelstaub in einem Heißzyklon abgeschieden und in die Wirbelschicht zurückgeleitet, daß gereinigte Abgas wird nachverbrannt und dabei metallisches Zink zu ZnO oxidiert und das ZnO wird in Staubabscheidern abgeschieden. Das reduzierende Gas wird durch einen Gaseinleitungsstutzen von unten eingeleitet. Es wird eine diskontinuierliche Arbeitsweise beschrieben, da das entzinkte Material nach Abstellen der Gaszufuhr durch den Gaseinleitungsstutzen abgelassen werden kann.

In der FR-PS 2 373 612 und in "Proceedings Ist. Proc. Technol. Conference" Washington 1980, Seiten 85 bis 103, wird beschrieben, daß eine Zink- und Blei-Verflüchtigung ohne Bildung von metallischem Eisen möglich ist, wenn keine Kohle als Reduktionsmittel verwendet wird. Aus Hüttenwerksstäuben, die festen Kohlenstoff in größeren Mengen enthalten - wie z.B. Hochofenstäube -, wird daher der Kohlenstoff vor der reduzierenden Behandlung entfernt. Dies kann entweder auf physikalischem Wege erfolgen oder der feste Kohlenstoffgehalt wird vorher in einer separaten Stufe unter oxidierenden Bedingungen fast vollständig verbrannt. Die Behandlung des Materials erfolgt entweder auf Wanderrosten oder in Schachtöfen. Die Entfernung des festen Kohlenstoffs erfordert eine separate Verfahrensstufe und bei der Verbrennung des festen Kohlenstoffs geht ein Teil der Wärme für das Verfahren verloren.

Der Erfindung liegt die Aufgabe zugrunde, ein kontinuierliches Verfahren zur Aufarbeitung von Hüttenwerks-Reststoffen zu schaffen, das eine reduzierende Behandlung in Anwesenheit von festem kohlenstoffhaltigem Material mit guter Verflüchtigung ermöglicht.

Die Lösung der Aufgabe erfolgt erfindungsgemäß dadurch, daß die thermische Behandlung in einer zirkulierenden Wirbelschicht erfolgt, in den unteren Teil des Wirbelschichtreaktors der zirkulierenden Wirbelschicht ein reduzierendes Fluidisierungsgas eingeleitet wird, das praktisch keinen freien Sauerstoff enthält, im unteren Teil in der Wirbelschicht ein Gehalt an festem Kohlenstoff von 5 bis 30 % eingestellt wird, das Reduktionspotential im unteren Teil des Wirbelschichtreaktors durch Wahl der Menge und Zusammensetzung des Fluidisierungsgases so eingestellt wird, daß mindestens 80 % des Eisengehaltes als $Fe^{2+}$, maximal 1 % als metallisches Eisen und der Rest als $Fe^{3+}$ vorliegen, in den oberen Teil des Wirbelschichtreaktors sauerstoffhaltige Gase eingeleitet werden, durch Verbrennung von festem Kohlenstoff der Wärmebedarf zum überwiegenden Teil gedeckt wird, jedoch die $CO_2$-Bildung nur soweit geführt wird, daß metallisches Zink nicht reoxidiert wird, die aus dem oberen Teil des Wirbelschichtreaktors ausgetragene Suspension in den Rückführzyklon der zirkulierenden Wirbelschicht geleitet und dort weitgehend von Feststoff befreit wird, abgeschiedener Feststoff in den Wirbelschichtreaktor derart zurückgeleitet wird, daß innerhalb der zirkulierenden Wirbelschicht der stündliche Feststoffumlauf mindestens das 5-fache des im Wirbelschichtreaktor befindlichen Feststoffgewichtes beträgt, das aus dem Rückführzyklon austretende Gas auf eine Temperatur abgekühlt wird, bei der das metallische Zink zu ZnO oxidiert wird und die staubförmigen Zink- und Blei-Verbindungen aus dem Gas abgeschieden werden.

Als Hüttenwerks-Reststoffe kommen insbesondere Gichtgasstäube, Konverterstäube und Elektroofenstäube aus der Eisen- und Stahlherstellung infrage. Beim Einsatz von Rückständen aus der Zink-Elektrolyse muß ein Jarosit-Rückstand vor dem Einsatz einer Sulfatspaltung unterworfen werden. Die Reststoffe können mit einer Korngröße bis zu etwa 3 mm eingesetzt werden. Die untere Zone der Wirbelschicht im Wirbelschichtreaktor wird stärker reduzierend betrieben als die obere Zone. Die untere Zone erstreckt sich bis zu 30 % der Höhe des Wirbelschichtreaktors. Der Gehalt an festem Kohlenstoff im Wirbelbett der unteren Zone wird auf 5 bis 30 % eingestellt. Falls metallisches Eisen durch das Eintragsmaterial in die obere Zone gelangt, wird dieses zu über 80 % zu $Fe^{2+}$ oxidiert, der Rest zu $Fe^{3+}$ und es verbleiben maximal 1 % als metallisches Eisen, d.h. es wirkt als Brennstoff. Als reduzierendes Fluidisierungsgas wird insbesondere Koksofengas und Stahlgas verwendet. Als sauerstoffhaltiges Gas kann Luft, sauerstoffangereicherte Luft und technisch reiner Sauerstoff verwendet werden. Die Temperatur im Wirbelschichtreaktor wird auf 900 bis 1100°C eingestellt. Die mittlere Feststoffdichte in der unteren Zone beträgt 300 bis 600 kg/m$^3$ und in der oberen Zone 5 bis 50 kg/m$^3$. Die Hüttenwerks-Reststoffe werden bevorzugt in die obere Zone aufgegeben. Falls der Gehalt der Hüttenwerks-Reststoffe an festem Kohlenstoff zu gering ist, wird festes kohlenstoffhaltiges Material - insbesondere Koks oder Anthrazit - aufgegeben. Der Ausdruck "zum überwiegenden Teil" bedeutet, daß deutlich mehr als 50 % des Wärmebedarfs durch Verbrennung von festem Kohlenstoff gedeckt wird. Ein Teil des Wärmebedarfes wird durch Verbrennung von reduzierendem Gas gedeckt. Ein Teil kann durch die Verbrennung von metallischem Eisen gedeckt werden, wenn metallisches Eisen in dem Aufgabegut vorhanden ist. Neben Zink und Blei werden Alkalien und z.B. Chlor verflüchtigt. Eventuell mit dem Aufgabegut eingetragenes Öl wird verdampft und wirkt als Brennstoff. Der Austrag des festen Materials erfolgt kontinuierlich aus dem unteren Teil des Wirbelschichtreaktors oder aus der Rückführleitung. Die Kühlung des aus dem Rückführzyklon austretenden Gases erfolgt durch Wasser-Eindüsung und/oder indirektem Wärmeaustausch. Die für die Reoxidation des metallischen Zink erforderliche Temperatur ist abhängig vom CO-Gehalt im CO/$CO_2$-Gemisch. Die zirkulierende Wirbelschicht besteht aus dem Wirbelschichtreaktor, dem Rückführzyklon und der Rückführleitung für den im Rückführzyklon abgeschiedenen Feststoff. Der Ausdruck "Rückführzyklon" beinhaltet einen Rückführzyklon oder mehrere gasseitig parallel geschaltete Rückführzyklone. Das bei der Erfindung angewendete Wirbelschichtprinzip zeichnet sich dadurch aus, daß - im Unterschied zur "klassischen" Wirbelschicht, bei der eine dichte Phase durch einen deutlichen Dichtesprung von dem darüber befindlichen Gasraum getrennt ist - Verteilungszustände ohne definierte Grenzschicht im Wirbelschichtreaktor vorliegen. Ein Dichtesprung zwischen dichter Phase und darüber befindlichem Staubraum ist nicht existent, jedoch nimmt innerhalb des Reaktors die Feststoffkonzentration von unten nach oben ständig ab. Bei der Definition der Betriebsbedingungen über die Kennzahlen von Froude und Archimedes ergeben sich die Bereiche:

$$0,1 \leqq 3/4 \cdot Fr^2 \cdot \frac{\rho g}{\rho k - \rho g} \leqq 10 \, ,$$

bzw.

$$0,01 \leqq Ar \leqq 100 \, ,$$

wobei

$$Ar = \frac{d_k{}^3 \cdot g\,(\rho k - \rho g)}{\rho g \cdot v^2}$$

und

$$Fr^2 = \frac{u^2}{g \cdot d_k}$$

sind.

Es bedeuten:

u     die relative Gasgeschwindigkeit in m/sec.

Ar     die Archimedes-Zahl

Fr     die Froude-Zahl

$\rho g$     die Dichte des Gases in kg/m$^3$

$\rho k$     die Dichte des Feststoffteilchens in kg/m$^3$

$d_k$     den Durchmesser des kugelförmigen Teilchens in m

$v$     die kinematische Zähigkeit in m$^2$/sec.

g     die Gravitationskonstante in m/sec.$^2$

Eine vorzugsweise Ausgestaltung besteht darin, daß festes kohlenstoffhaltiges Material in den unteren Teil des Wirbelschichtreaktors unterhalb der Zufuhrstelle der sauerstoffhaltigen Gase eingeleitet wird. Dadurch erfolgt eine bessere Ausnutzung des Kohlenstoffs im Wirbelschichtreaktor.

Eine vorzugsweise Ausgestaltung besteht darin, daß der aus der zirkulierenden Wirbelschicht ausgetragene heiße Feststoff in direkten Wärmeaustausch mit ölhaltigen feuchten Feststoffen gebracht wird, und die entstehenden Verdampfungsprodukte in den Wirbelschichtreaktor geleitet werden. Als ölhaltige feuchte Feststoffe werden solche verwendet, die praktisch kein Zink und Blei enthalten, wie z.B. Walzenzunder. Als Verdampfungsprodukte entstehen Öl, Krackprodukte und Wasserdampf. Die Einleitung erfolgt vorzugsweise etwa in Höhe der Zufuhrstelle der sauerstoffhaltigen Gase. Dadurch kann der Wärmeinhalt der aus dem Wirbelschichtreaktor ausgetragenen Feststoffe zur Entsorgung solcher Materialien verwendet werden und die dabei entstehenden brennbaren Produkte im Wirbelschichtreaktor ausgenutzt werden.

Eine vorzugsweise Ausgestaltung besteht darin, daß der direkte Wärmeaustausch in einer klassischen Wirbelschicht erfolgt. Als Fluidisierungsgas für die klassische Wirbelschicht wird insbesondere Luft verwendet, die mit den Verdampfungsprodukten in den Wirbelschichtreaktor als sauerstoffhaltiges Gas eingeleitet wird.

Eine vorzugsweise Ausgestaltung besteht darin, daß der direkte Wärmeaustausch in einem mechanischen Mischer erfolgt. Als mechanische Mischer sind insbesondere Schnecken-Mischer geeignet.

Eine vorzugsweise Ausgestaltung besteht darin, daß das Verhältnis von CO zu $CO_2$ im Abgas aus dem Rückführzyklon 0,3 bis 1 beträgt. Dieses Verhältnis ergibt besonders gute Betriebsbedingungen.

Eine vorzugsweise Ausgestaltung besteht darin, daß das Fluidisierungsgas und/oder das sauerstoffhaltige Gas vor der Einleitung in den Wirbelschichtreaktor im indirektem Wärmeaustausch vorgewärmt wird. Als Heizmedium kann das Abgas aus dem Rückführzyklon vor der Staubabscheidung oder das nachverbrannte Abgas nach der Staubabscheidung verwendet werden. Weiterhin kann Fremdwärme, wie z.B. Heißgase aus Koksofen- oder Stahlgasverbrennung, verwendet werden. Dadurch kann die Wärmeökonomie des Verfahrens verbessert werden.

Eine vorzugsweise Ausgestaltung besteht darin, daß das aufzugebende Material durch direkten Wärmeaustausch mit dem Gas aus dem Rückführzyklon vorgewärmt wird. Die Vorwärmung erfolgt in Schwebegas-Wärmeaustauschern. Dadurch kann die Wärmeökonomie des Prozesses verbessert werden.

Eine vorzugsweise Ausgestaltung besteht darin, daß ultrafeine Hüttenwerks-Reststoffe vor dem Einsatz in die zirkulierende Wirbelschicht durch Mikro-Agglomeration in Agglomerate von maximal 3 mm Korndurchmesser geformt werden. Die Mikro-Agglomeration kann z.B. durch Herstellung von Mikro-Pellets erfolgen. Dadurch wird im Wirbelschichtreaktor ein einheitlicherer Bett-Aufbau erzielt und eine bessere Trennung von Feststoff und Metalldampf enthaltenden Gasen ermöglicht.

Die Erfindung wird anhand einer Figur und eines Beispieles näher erläutert.

Die zirkulierende Wirbelschicht besteht aus dem Wirbelschichtreaktor (1), dem Rückführzyklon (2) und der Rückführleitung (3). Die Hüttenwerks-Reststoffe werden über Leitung (4) und die Kohle über Leitung (5) in den Wirbelschichtreaktor (1) eingetragen. Das reduzierende Fluidisierungsgas wird über Leitung (6) in den indirekten Wärmeaustauscher (7) geleitet, dort vorgewärmt und über Leitung (9) in den Wirbelschichtreaktor (1) eingeleitet. Sauerstoffhaltiges Gas wird über Leitung (10) in den indirekten Wärmeaustauscher (11) geleitet, dort vorgewärmt und über Leitung (12) als Sekundärgas in den Wirbelschichtreaktor (1) geleitet. Die stärker reduzierend betriebene untere Zone der Wirbelschicht im Wirbelschichtreaktor (1) erstreckt sich etwa bis zur Zufuhrstelle (12) für das sauerstoffhaltige Sekundärgas. Die aus dem Wirbelschichtreaktor (1) ausgetragene Gas-Feststoff-Suspension wird im Rückführzyklon (2) weitgehend vom Feststoff befreit. Der abgetrennte Feststoff wird über die Rückführleitung (3) in den Wirbelschichtreaktor (1) zurückgeführt. Das Gas aus dem Rückführzyklon (2) wird über Leitung (13) in einen indirekten Wärmeaustauscher (14) geleitet und dort auf eine Temperatur abgekühlt, bei der metallisches Zn zu ZnO oxidiert wird und dann über Leitung (15) in den Staubabscheider (16) geleitet. Das vom Staub befreite Gas wird über Gebläse (17) und Leitung (18) abgeführt. Der im Staubabscheider (16) abgeschiedene Sekundärstaub wird über Leitung (19) abgezogen. Aus dem unteren Teil des Wirbelschichtreaktors (1) wird über Leitung (20) Feststoff kontinuierlich abgezogen und in den klassischen Wirbelschichtreaktor (21) geleitet. Über Leitung (22) werden ölhaltige feuchte Feststoffe und über Leitung (23) ein sauerstoffhaltiges Fluidisierungsgas in den Wirbelschichtreaktor (21) eingeleitet. Über Leitung (24) wird das aufgeheizte Fluidisierungsgas, das die entstandenen Verdampfungsprodukte enthält, als Sekundärgas in die Leitung (12) und von dort in den Wirbelschichtreaktor (1) geleitet. Über Leitung (25) werden die Feststoffe aus dem Wirbelschichtreaktor (21) abgezogen.

Beispiel

Der Wirbelschichtreaktor hatte eine Höhe von 15 m und einen Durchmesser von 2,6 m. Die Zufuhrstelle für die sauerstoffhaltigen Gase lag bei 4 m von unten gerechnet. Die Zugabestelle für die Kohle lag bei 3,5 m Höhe, die Zugabestelle für die Hüttenwerks-Reststoffe bei 4,5 m. Die Rückführleitung für den im Rückführzyklon abgeschiedenen Feststoff mündete bei einer Höhe von 5 m in den Wirbelschichtreaktor. Der behandelte Feststoff wurde aus der unteren Zone des Wirbelschichtreaktors abgezogen.

Als Hüttenwerks-Reststoff wurde eine Mischung aus Gichtgasschlamm, Konverterstaub und EGR-Staub aus der Sinteranlage folgender Zusammensetzung, bezogen auf trockenes Material, eingesetzt:

Fe-Gesamt    57,5 %

$Fe^{2+}$    4,1 %

| | |
|---|---|
| Fe metallisch | 10,1 % |
| Mn | 0,8 % |
| P | 0,04 % |
| $SiO_2$ | 2,4 % |
| CaO | 4,6 % |
| MgO | 0,7 % |
| S | 0,24 % |
| Pb | 0,6 % |
| Zn | 1,6 % |
| $K_2O + Na_2O$ | 1,8 % |
| C | 4,6 % |
| $Cl^-$ | 0,6 % |
| Glühverlust | 4 % |

Die Feuchtigkeit betrug      12 %.

In den Wirbelschichtreaktor wurden 20 t/h dieser Mischung und 3,2 t/h Koks mit einer Korngröße unter 1 mm chargiert. Als Fluidisierungsgas wurden 4000 $Nm^3$/h Koksofengas in den Wirbelschichtreaktor eingeleitet.

Das Koksofengas enthielt

| | |
|---|---|
| 60,2 % | $H_2$ |
| 25,5 % | $CH_4$ |
| 6 % | CO |
| 1,5 % | $CO_2$ |
| 3,4 % | $N_2$ |
| 3,1 % | schwere Kohlenwasserstoffe |

Das Koksofengas wurde in einem indirektem Wärmeaustauscher vorgewärmt und mit 600°C in den Wirbelschichtreaktor eingeleitet. Als sauerstoffhaltiges Gas wurde durch indirekten Wärmeaustausch auf 750°C vorgewärmte Luft in einer Menge von 11000 $Nm^3$/h in den Wirbelschichtreaktor eingeleitet. Die Temperatur im Wirbelschichtreaktor wurde auf 1000°C eingestellt.

Das aus dem Rückführzyklon austretende Gas hatte folgende Zusammensetzung:

| | |
|---|---|
| 3 % | CO |
| 6 % | $CO_2$ |
| 11 % | $H_2$ |
| 35 % | $H_2O$ |
| 45 % | $N_2$ |

Das Gas wurde in einem indirektem Wärmeaustauscher auf 250°C abgekühlt und dann durch ein Filter geleitet. Im Filter wurde 1 t/h Sekundärstaub abgeschieden.

Der Sekundärstaub enthielt

| | |
|---|---|
| 26 % | Zn |
| 10 % | Pb |
| 40 % | C |

Aus der unteren Zone des Wirbelschichtreaktors wurden 19,2 t/h Feststoff mit einer Temperatur von 1000°C abgezogen und in einen Wirbelbettkühler mit klassischer Wirbelschicht eingetragen. In den Wirbelbettkühler wurden 4 t/h Walzenzunderschlamm mit 0,8 t/h Wasser folgender Zusammensetzung

| | |
|---|---|
| 68 % | Fe-Gesamt |
| 4 % | organischer Bestandteile |

eingetragen.

Durch den Boden des Wirbelkühlers wurden 1000 $Nm^3$/h Luft eingeleitet, oben aus dem Wirbelkühler abgezogen und als sauerstoffhaltiges Gas in den Wirbelschichtreaktor der zirkulierenden Wirbelschicht eingeleitet. Aus dem Wirbelkühler wurde gekühlter Feststoff in einer Menge von 23 t/h abgezogen.

Der Feststoff enthielt:

| | |
|---|---|
| Fe-Gesamt | 58 % |
| Fe metallisch | 0,5 % |
| C | 15 % |
| S | 0,2 % |
| Zn + Pb | 0,1 % |

Die Vorteile der Erfindung bestehen darin, daß der überwiegende Teil der für den Prozeß erforderlichen Wärmemenge durch direkte Verbrennung von festen Kohlen in der Wirbelschicht selbst erzeugt werden kann und trotzdem eine weitgehende Entzinkung erfolgt. Dadurch kann die Aufarbeitung der Rückstände in sehr wirtschaftlicher Weise erfolgen.

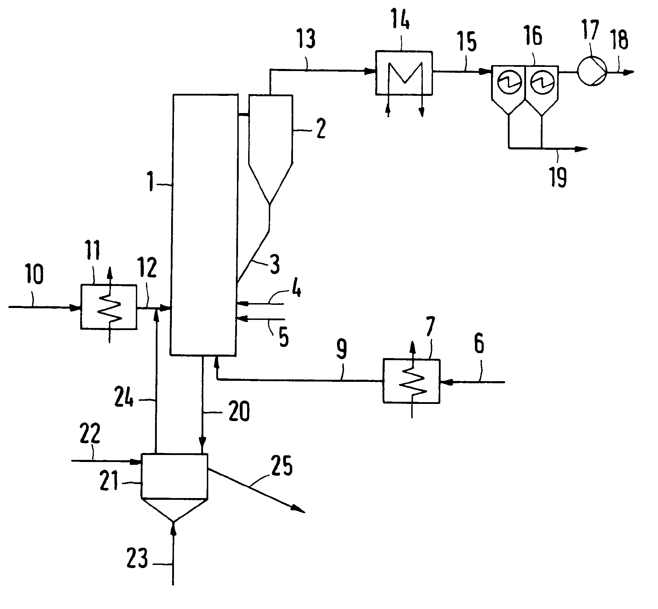

**Patentansprüche**

1. Verfahren zur Aufarbeitung von Zink und Blei enthaltenden Hüttenwerks-Reststoffen durch thermische Behandlung bei erhöhten Temperaturen und reduzierenden Bedingungen, wobei Zink und Blei verflüchtigt und höhere Eisenoxide maximal zum FeO reduziert werden, und verdampftes Zink und Blei aus dem Abgas nach einer Abkühlung abgeschieden werden, dadurch gekennzeichnet, daß die thermische Behandlung in einer zirkulierenden Wirbelschicht erfolgt, in den unteren Teil des Wirbelschichtreaktors der zirkulierenden Wirbelschicht ein reduzierendes Fluidisierungsgas eingeleitet wird, das praktisch keinen freien Sauerstoff enthält, im unteren Teil in der Wirbelschicht ein Gehalt an festem Kohlenstoff von 5 bis 30 % eingestellt wird, das Reduktionspotential im unteren Teil des Wirbelschichtreaktors durch Wahl der Menge und Zusammensetzung des Fluidisierungsgases so eingestellt wird, daß mindestens 80 % des Eisengehaltes als $Fe^{2+}$, maximal 1 % als metallisches Eisen und der Rest als $Fe^{3+}$ vorliegen, in den oberen Teil des Wirbelschichtreaktors sauerstoffhaltige Gase eingeleitet werden, durch Verbrennung von festem Kohlenstoff der Wärmebedarf zum überwiegenden Teil gedeckt wird, jedoch die $CO_2$-Bildung nur soweit geführt wird, daß metallisches Zink nicht reoxidiert wird, die aus dem oberen Teil des Wirbelschichtreaktors ausgetragene Suspension in den Rückführzyklon der zirkulierenden Wirbelschicht geleitet und dort weitgehend von Feststoff befreit wird, abgeschiedener Feststoff in den Wirbelschichtreaktor derart zurückgeleitet wird, daß innerhalb der zirkulierenden Wirbelschicht der stündliche Feststoffumlauf mindestens das 5-fache des im Wirbelschichtreaktor befindlichen Feststoffgewichtes beträgt, das aus dem Rückführzyklon austretende Gas auf eine Temperatur abgekühlt wird, bei der das metallische Zink zu ZnO oxidiert wird und die staubförmigen Zink- und Blei-Verbindungen aus dem Gas abgeschieden werden.

2. Verfahren nach Anspruch 1, dadurch gekennzeichnet, daß festes kohlenstoffhaltiges Material in den unteren Teil des Wirbelschichtreaktors unterhalb der Zufuhrstelle der sauerstoffhaltigen Gase eingeleitet wird.

3. Verfahren nach Anspruch 1 oder 2, dadurch gekennzeichnet, daß der aus der zirkulierenden Wirbelschicht ausgetragene heiße Feststoff im direkten Wärmeaustausch mit ölhaltigen feuchten Feststoffen gebracht wird, und die entstehenden Verdampfungsprodukte in den Wirbelschichtreaktor geleitet werden.

4. Verfahren nach Anspruch 3, dadurch gekennzeichnet, daß der direkte Wärmeaustausch in einer klassischen Wirbelschicht erfolgt.

5. Verfahren nach Anspruch 3, dadurch gekennzeichnet, daß der direkte Wärmeaustausch in einem mechanischen Mischer erfolgt.

6. Verfahren nach einem oder mehreren der Ansprüche 1 bis 5, dadurch gekennzeichnet, daß das Verhältnis von CO zu $CO_2$ im Abgas aus dem Rückführzyklon 0,3 bis 1 beträgt.

7. Verfahren nach einem oder mehreren der Ansprüche 1 bis 6, dadurch gekennzeichnet, daß das Fluidisierungsgas und/oder das sauerstoffhaltige Gas vor der Einleitung in den Wirbelschichtreaktor im indirekten Wärmeaustausch vorgewärmt wird.

8. Verfahren nach einem oder mehreren der Ansprüche 1 bis 7, dadurch gekennzeichnet, daß das aufzugebende Material durch direkten Wärmeaustausch mit dem Gas aus dem Rückführzyklon vorgewärmt wird.

9. Verfahren nach einem oder mehreren der Ansprüche 1 bis 8, dadurch gekennzeichnet, daß ultrafeine Hüttenwerks-Reststoffe vor dem Einsatz in die zirkulierende Wirbelschicht durch Mikro-Agglomeration in Agglomerate von maximal 3 mm Korndurchmesser geformt werden.

**Claims**

1. A method for reprocessing residues from metallurgical plants which contain zinc and lead by thermal treatment at elevated temperatures and under reducing conditions, with zinc and lead being volatilised and higher iron oxides being reduced as fully as possible to FeO, and evaporated zinc and lead being separated off from the exhaust gas after cooling, characterised in that the thermal treatment takes place in a circulating fluidised bed, a reducing fluidising gas which contains practically no free oxygen is introduced into the lower part of the fluidised bed reactor of the circulating fluidised bed, a content of solid carbon of 5 to 30% is set in the lower part in the fluidised bed, the reduction potential in the lower part of the fluidised bed reactor is set by selecting the rate and composition of the fluidising gas such that at least 80% of the iron content is present as $Fe^{2+}$, at most 1% as metallic iron and the remainder as $Fe^{3+}$, oxygen-containing gases are introduced into the upper part of the fluidised bed reactor, the heat requirement is predominantly covered by the combustion of solid carbon, but $CO_2$ is only formed at such a rate that metallic zinc is not reoxidised, the suspension discharged from the upper part of the fluidised bed reactor is passed into the recycling cyclone of the circulating fluidised bed and is largely freed of solids therein, solids which have been separated off are returned to the fluidised bed reactor such that within the circulating fluidised bed the hourly circulation of solids is at least 5 times the weight of solid located in the fluidised bed reactor, the gas emerging from the recycling cyclone is cooled to a temperature at which the metallic zinc is oxidised to ZnO and the dust-like zinc and lead compounds are separated out of the gas.

2. A method according to Claim 1, characterised in that solid carbon-containing material is introduced into the lower part of the fluidised bed reactor beneath the point at which the oxygen-containing gases are supplied.

3. A method according to Claim 1 or 2, characterised in that the hot solids discharged from the circulating fluidised bed are brought into a direct heat exchange with oil-containing moist solids, and the resulting vaporisation products are passed into the fluidised bed reactor.

4. A method according to Claim 3, characterised in that the direct heat exchange takes place in a conventional fluidised bed.

5. A method according to Claim 3, characterised in that the direct heat exchange takes place in a mechanical mixer.

6. A method according to one or more of Claims 1 to 5, characterised in that the ratio of CO to $CO_2$ in the exhaust gas from the recycling cyclone is 0.3 to 1.

7. A method according to one or more of Claims 1 to 6, characterised in that the fluidising gas and/or the oxygen-containing gas are preheated in an indirect heat exchange before being introduced into the fluidised bed reactor.

8. A method according to one or more of Claims 1 to 7, characterised in that the material to be charged is preheated by a direct heat exchange with the gas from the recycling cyclone.

9. A method according to one or more of Claims 1 to 8, characterised in that ultra-fine residues from metallurgical plants are shaped by micro-agglomeration into agglomerates of at most 3 mm grain diameter before being used in the circulating fluidised bed.

**Revendications**

1. Procédé de traitement de matières résiduelles sidérurgiques contenant du zinc et du plomb, par traitement thermique à des températures hautes et dans des conditions réductrices, le zinc et le plomb étant volatilisés et les oxydes de fer supérieurs étant réduits au maximum en FeO, et le zinc et le plomb évaporés étant séparés de l'effluent gazeux après un refroidissement, caractérisé en ce qu'il consiste à effectuer le traitement thermique dans un lit fluidisé circulant, à envoyer dans la partie inférieure du réacteur à lit fluidisé circulant un gaz réducteur de fluidisation qui ne contient pratiquement pas d'oxygène libre, à établir dans la partie inférieure du lit fluidisé une teneur en carbone solide de 5 à 30 %, à régler le potentiel de réduction dans la partie inférieure du réacteur à lit fluidisé par le choix de la quantité et de la composition du gaz de fluidisation, de manière à avoir au moins 80 % de la teneur en fer sous forme de $Fe^{2+}$, au maximum 1 % sous forme de fer métallique, et le reste sous forme de $Fe^{3+}$, à introduire dans la partie supérieure du réacteur à lit fluidisé des gaz contenant de l'oxygène, à couvrir les besoins de chaleur pour la partie prépondérante par combustion de carbone solide, mais à n'effectuer la formation de $CO_2$ que jusqu'à ce

7

que le zinc métallique ne soit pas réoxydé, à envoyer la suspension soutirée de la partie supérieure du réacteur à lit fluidisé dans le cyclone de recyclage du lit fluidisé circulant, et à l'y débarrasser, dans une grande mesure, de la matière solide, à retourner la matière solide séparée au réacteur à lit fluidisé de façon qu'au sein du lit fluidisé circulant, la circulation horaire de matière solide représente au moins 5 fois le poids de matière solide se trouvant dans le réacteur à lit fluidisé, à refroidir le gaz sortant du cyclone de recyclage à une température à laquelle le zinc métallique est oxydé en ZnO et les composés pulvérulents de zinc et de plomb sont séparés du gaz.

2. Procédé suivant la revendication 1, caractérisé en ce qu'il consiste à envoyer de la matière carbonacée solide à la partie inférieure du réacteur à lit fluidisé en-dessous du point d'introduction des gaz contenant de l'oxygène.

3. Procédé selon la revendication 1 ou 2, caractérisé en ce qu'il consiste à mettre la matière solide chaude déchargée du lit fluidisé circulant en échange de chaleur direct avec des matières solides humides et contenant de l'huile, et à envoyer les produits d'évaporation formés au réacteur à lit fluidisé.

4. Procédé selon la revendication 3, caractérisé en ce qu'il consiste à effectuer l'échange de chaleur direct dans un lit fluidisé classique.

5. Procédé selon la revendication 3, caractérisé en ce qu'il consiste à effectuer l'échange de chaleur direct dans un mélangeur mécanique.

6. Procédé selon une ou plusieurs des revendications 1 à 5, caractérisé en ce que le rapport de CO à $CO_2$ dans l'effluent gazeux sortant du cyclone de recyclage est compris entre 0,3 et 1.

7. Procédé selon une ou plusieurs des revendications 1 à 6, caractérisé en ce qu'il consiste à préchauffer le gaz de fluidisation et/ou le gaz contenant de l'oxygène par échange de chaleur indirect avant de l'introduire dans le réacteur à lit fluidisé.

8. Procédé selon une ou plusieurs des revendications 1 à 7, caractérisé en ce qu'il consiste à préchauffer la matière à charger par échange de chaleur direct avec le gaz provenant du cyclone de recyclage.

9. Procédé selon une ou plusieurs des revendications 1 à 8, caractérisé en ce qu'il consiste à mouler des matières résiduelles sidérurgiques ultra-fines avant de les envoyer dans le lit fluidisé circulant par micro-agglomération en des produits agglomérés ayant un diamètre de grains de 3 mm au plus.